# EUROPEAN PATENT APPLICATION

(11) **EP 4 309 784 A1**
(43) Date of publication of application: **24.01.2024**
(21) Application number: 22186109.9
(22) Date of filing: 20.07.2022
(51) Int. Cl.: B01J 23/52, B01J 35/00

(54) **EMBEDDING OF CATALYTICALLY ACTIVE NANOPARTICLES INTO SUPERSTRUCTURES OF PLASMONIC NANOPARTICLES TO ENHANCE THE PHOTOCATALYTIC ACTIVITY**

(71) Applicant: Universität Hamburg, 20148 Hamburg (DE); Ludwig-Maximilians-Universität München, 80539 München (DE)
(72) Inventor: SCHULZ, Florian, 21035 Hamburg (DE); CORTES, Emiliano, 81927 München (DE); HERRAN, Matias, 80807 München (DE)
(74) Representative: Maiwald GmbH

(57) **Abstract**

The present invention relates to a device for heterogeneous plasmonic photocatalysis. The device comprises a crystalline or quasi-crystalline superstructure of plasmonic nanoparticles attached to a substrate, and a plurality of catalytically active nanoparticles embedded into the superstructure of plasmonic nanoparticles. Further, the invention relates to a method of manufacturing the device for heterogeneous plasmonic photocatalysis.

## Description

### FIELD OF THE INVENTION

The present invention relates to a device for heterogeneous plasmonic photocatalysis, and a method of manufacturing the device for heterogeneous plasmonic photocatalysis.

### BACKGROUND OF THE INVENTION

Plasmonic nanoparticles (PNPs) is a common denomination for entities of nanometer range constituted by metals like silver (Ag), gold (Au), copper (Cu), aluminum (Al), and others. The metallic nature of such structures enables to support the so-called localized surface plasmon resonances (LSPR). These resonant phenomena are coherent and collective oscillations of the conduction band electrons driven by external oscillating electric fields like light. The localization of the light is associated with a localized enhancement of the electric field at the particles' surface. This is possible because the particles are significantly smaller than the wavelength of the driving light. The diameter of such a plasmonic nanoparticle is smaller than about 100 nm. The energy stored in the coherent oscillation of the free electrons is dissipated through the creation of excited carriers, electrons and holes, which is followed by the generation of local heat restoring the initial situation. When the plasmons of adjacent nanoparticles interact with each other, for example by coupling, the electric field can be further confined, creating a region of maximum enhancement between the particles, a so-called "hotspot". The plasmonic coupling strongly depends on the distance between the particles, and smaller interparticle distances result in stronger fields between the particles. However, phenomena of quantum nature like charge migration may take place beyond sub-nanometer distances, leading to a reduced electric field within the interparticle gap and a breakdown of the hotspot.

Therefore, to obtain a maximized field enhancement between two plasmonic particles, it may be necessary to optimize their separation distance in a range of 1-2 nm up to a few nanometers. These considerations can be extended to multiple particles, different particle geometries and materials and spatial arrangements of the particles. It has been shown in the context of surface-enhanced spectroscopies that the normalized enhancement factor, which is directly related to the number of hotspots and the field enhancement, scales with the number of particles in small clusters. An interesting case is the arrangement of plasmonic nanoparticles into crystalline arrangements, so-called supercrystals. The syntheses of gold nanoparticle (AuNP) supercrystals has been developed, and the characterization and control of particle size and interparticle spacing has been achieved by one of the inventors. These AuNP are currently state-of-the-art in terms of crystallinity, with respect to parameters like a narrow distribution of the interparticle distances (gaps) and lattice constants, and large domain sizes with low numbers of defects. The syntheses of these supercrystals and their strong interactions with light are well understood.

The strong interaction of supercrystals of plasmonic nanoparticles with light is especially relevant as it leads to several benefits. Large field enhancements in the hotspots of the material are obtained, and high area and volume density of hotspots is achieved due to the resulting crystalline structure with a close packing (like fcc) of the nanoparticles and with tunable gaps in the range 1 to 10 nm between well-separated constituents. In addition, such structures result in collective plasmonic modes and ultra- and deep strong light-matter interactions in the supercrystals are possible resulting in well-defined polaritonic modes. Essentially, at these particular polaritonic modes, i.e. at the according energies and wavelengths, the transmission of the supercrystals becomes very large compared to gold films or disordered AuNP films of the same thickness. In other words, the energy of the light field is stored mainly in the hotspots, which leads to minimal plasmonic (ohmic) losses in the AuNP. Further, the coupled and collective plasmonic modes of the crystalline thin films of the supercrystals of plasmonic nanoparticles interact with light in a broad wavelength range of the electromagnetic spectrum, capturing light from the visible range to the near infrared range. In regions with no polaritonic modes, light can be efficiently absorbed and converted into heat through plasmonic or ohmic losses or band transitions of the gold.

The lack of renewable energy sources and the inherent interaction of PNPs with incoming light encourages the application of such systems for photocatalysis. Typically, PNPs display their resonance within the spectral range at which the sun peaks its light emission profile. Hence, PNPs can act as superior sunlight absorbers assisting the transduction of sunlight energy into a valuable energy source such as hydrocarbons or molecular hydrogen (H2). As already stated, upon LSPR excitation, high field enhancements, generation of carriers and elevated local temperatures occur. The effect of the temperature to reaction rates is well-understood and described through Arrhenius' law, which predicts an exponential increase of the reaction rate with the increasing temperature. In this regard, plasmonic photocatalysts can create regions of elevated temperatures in its vicinities, yielding tremendous temperature gradients between the surface of the nanoparticles and bulk medium. Alternatively, non-thermal effects can also speed-up reactions rates. The high local fields can change the energy levels of adsorbed molecules or molecules in general and e.g. lower the energy of transition states, resulting in lowered activation barriers. Similarly, other processes of the heterogeneous catalytic process like reactant adsorption and desorption can be affected. Additionally, high local fields can increase the absorption of nanoparticles located in these fields thereby increasing their catalytic activity. Finally, the relaxation of plasmons transiently generates populations of electrons and holes as excited carriers, which are referred to as hot electrons and hot holes. The details of this carrier generation and their role in photocatalysis is subject of intense current research and discussion. Many studies up to now indicate that these carriers can significantly increase the rates of photocatalytic reactions and even may enable reactions, which would not proceed without those carriers. Even though the exact role and quantitative contribution to plasmonic photocatalysis by these different thermal and non-thermal effects are under debate, it is well-established that plasmonic nanostructures can significantly enhance the rates of various relevant reactions and the according field of research is denominated as Plasmonic Photocatalysis.

With the continuous development of the field, the capability to assemble PNPs into repetitive domains of micrometer size opens up a new set of photocatalyst that the inventors of the present invention strongly believe that is worth to explore. The associated optical properties of these systems can be exploited to fulfill the energy demands.

In the following, the current status of plasmonic nanoparticles for photocatalysis are briefly described. The positive impact of PNPs in catalysis has been demonstrated for numerous nanostructures and for various reactions. In spite of the improved performances upon illumination of such structures, the research field shifted towards the combination of these light harvesters with alternative materials -heterostructures- pursuing a boost in energy conversion efficiencies. Nowadays there is a vast literature in which PNPs have been complemented with more catalytically active metals, like Pt, Pd, Ru, Rh, etc., semiconductors like Ti02, CdS, CdSe, Cu2O, 2D materials like graphene, C3N4, etc., or metal-organic frameworks, MOFs.

In the following, it is focused on the PNPs-catalytic metal heterosystem, and a brief description of the status of the field is given. For the understanding of the general strategies for nanostructures it is important to point out that typical plasmonic metals like Au and Ag, which are good light harvesters, are not good catalysts for many reactions, while many catalytic metals are known for their good activity for many reactions but do not absorb in the visible, NIR and IR range. A common approach beyond the use of PNP and nanostructures alone is therefore the combination of plasmonic material and a catalytic material in heterostructures, enabling to exploit the benefits of the individual components. Among the huge variety of these bimetallic heterostructures, one can distinguish those with plasmonic and catalytic metal or material in direct contact allowing for transfer and transport of charge carriers and those with an isolating barrier between the constituents. The reason for their preparation is often of academic nature, i.e. the attempt for a disentangling and better understanding of the involved mechanisms and contributions to plasmonic photocatalysis. Interestingly, efficient plasmonic photocatalysis is possible and was demonstrated even with heterostructures where plasmonic and catalytic material are not in contact because thermal effects and the different field effects do not rely on direct charge/carrier transport. On the other hand, if hot carriers are contributing significantly to the reaction enhancement, very efficient carrier extraction to the catalytic material is required. To make use of the different hot carriers it is therefore preferable to prepare a heterostructure with direct contact of plasmonic and catalytic material and to choose the involved materials judiciously to optimize the fermi energies towards an efficient energy flow into the desired catalytic reaction. This leads to another complication of the situation because the direct growth of another metal onto the plasmonic material can dramatically change its plasmonic properties and this has consequences for the formation of plasmonic modes, especially collective or polaritonic modes, and the near field enhancement and hot spot formation and distribution. Briefly, by gaining understanding in the underlying phenomena in each structure, it may be possible to tailor efficient plasmonic photocatalysts.

US 2013/01682 A1 discloses photoactive materials comprising nanoparticles of at least two photoactive constituents.

Niclas S. Mueller et al., Nature Vol. 583, July 2020, describes deep strong light-matter coupling in plasmonic nanoparticle crystals.

Florian Schulz et al., Nature Communications 11, 3821 (2020) describes structural order in plasmonic superlattices.

The inventors of the present invention have thus found that it would be advantageous to have an improved device for heterogeneous plasmonic photocatalysis with an optimized configuration of plasmonic and photocatalytic material enabling enhanced photocatalytic activity.

### SUMMARY OF THE INVENTION

It is an object of the present invention to provide an improved device for heterogeneous plasmonic photocatalysis that provides an enhanced photocatalytic activity.

The object of the present invention is solved by the subject matter of the independent claims, wherein further embodiments are incorporated in the dependent claims.

The described embodiments similarly pertain to the device for heterogeneous plasmonic photocatalysis, and the method of manufacturing the device for heterogeneous plasmonic photocatalysis. Synergistic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first embodiment of the invention, there is provided a device for heterogeneous plasmonic photocatalysis. The device comprises a substrate, a superstructure of plasmonic nanoparticles attached to the substrate, and a plurality of catalytically active nanoparticles embedded into the superstructure of plasmonic nanoparticles.

Through this device for heterogeneous plasmonic photocatalysis according to the invention, plasmonic photocatalysis can be efficiently improved. As stated above, the large field enhancement, high area and volume hotspot density and the minimum losses position plasmonic supercrystals as very promising platform for the transduction of sunlight energy into chemical energy.

By the combination of plasmonic nanoparticles and catalytically active nanoparticles into well-ordered quasicrystalline or crystalline superstructures, a bimetallic supercrystal for heterogeneous plasmonic photocatalysis with improved properties and photocatalytic efficiency can be provided. The supercrystal is formed by the regular arrangement of the plasmonic nanoparticles. In addition, the catalytically active nanoparticles are arranged in the superstructure of the plasmonic nanoparticles. This can be by arranging the catalytically active nanoparticles in interspaces of the superstructure, or by attaching the catalytically active nanoparticles to the surface of the plasmonic nanoparticles. With a device according to the invention, the deep strong coupling and the plasmonic photocatalysis is effectively combined. The term 'heterogeneous plasmonic photocatalysis' refers to the fact, that the device according to the invention comprises at least two different metals, wherein the plasmonic component is responsible for efficient absorption of light and the catalytically active component is responsible for enabling the intended reaction. Thus, the bimetallic supercrystal of plasmonic material and catalytically active material can efficiently transfer the absorbed energy from the plasmonic nanoparticles via electric coupling to the catalytically active nanoparticles. The described combination of plasmonic nanoparticles and catalytically active nanoparticles into well-ordered superstructures like supercrystals provides an unexpected and surprising increase in photocatalytic efficiency.

In an embodiment of the invention, a diameter of the plasmonic nanoparticles and a diameter of the catalytically active nanoparticles is in the range of 1 to 100 nm.

In an embodiment of the invention, the diameter of the plasmonic nanoparticles is larger than 20 nm and/or the diameter of the catalytically active nanoparticles is smaller than 10 nm.

Both types of nanoparticles, i.e. the plasmonic nanoparticles and the catalytically active nanoparticles, can be of a size in the range of 1 to 100 nm in diameter. Preferably, the plasmonic nanoparticles are larger than 20 nm in diameter to maximize light-matter interactions, and the catalytically active nanoparticles are preferably smaller than 10 nm in diameter for maximum catalytic performance and effective intercalation into small gaps of the superstructure, to utilize the hotspots.

In an embodiment of the invention, the superstructure of plasmonic nanoparticles is a crystalline or a quasi-crystalline superstructure. Thus, the plasmonic nanoparticles are arranged in a regular pattern with well-defined distances to adjacent nanoparticles.

In an embodiment of the invention, the superstructure of plasmonic nanoparticles has a two-dimensional hexagonal order, or a face-centered cubic or hexagonal close-packed three-dimensional order.

In an embodiment of the invention, the superstructure of plasmonic nanoparticles consists of a monolayer or of a multilayer of plasmonic nanoparticles. Multilayer can be understood as a plurality of layers, wherein the number of layers can be in range from two to several hundred. The thin-film character of the material is advantageous for heterogeneous catalysis because substantially all nanoparticles are exposed to light and catalyst and can contribute to light absorption and catalytic activity. Furthermore, the removal of the catalyst from the device is facilitated.

In an embodiment of the invention, the plurality of catalytically active nanoparticles is intercalated in interspaces of the superstructure of plasmonic nanoparticles in between the plasmonic nanoparticles. Thus, the catalytically active nanoparticles can fill the space between the plasmonic nanoparticles, preferably without direct contact to the plasmonic nanoparticles. The catalytically active nanoparticles can form a regular pattern, but can alternatively be homogeneously distributed over the interspaces.

In an embodiment of the invention, each of the plurality of catalytically active nanoparticles is positioned essentially in the center between three adjacent plasmonic nanoparticles. In this embodiment, preferably one of the catalytically active nanoparticles is allocated to each of the spaces in the center between three adjacent plasmonic nanoparticles providing a regular pattern of the catalytically active nanoparticles as well as of the plasmonic nanoparticles. Alternatively, the catalytically active nanoparticles can be positioned essentially in the center between two adjacent plasmonic nanoparticles.

In an embodiment of the invention, the plurality of catalytically active nanoparticles is attached to a surface of the plasmonic nanoparticles, thereby generating bimetallic nanoparticles comprising a plasmonic metal core and a catalytically active metal coating.

Alternatively, in this embodiment, bimetallic nanoparticles with a plasmonic metal core and a catalytic metal coating can be used to prepare superstructures. Thus, the bimetallic nanoparticle can comprise a plasmonic nanoparticles as its core, which is coated with a plurality of catalytically active nanoparticles to form the catalytically active metal coating. These bimetallic nanoparticles can be arranged in ta regular pattern in order to form the superstructure of plasmonic nanoparticles.

In an embodiment of the invention, the device further comprises a porous layer of silica coated onto the superstructure of plasmonic nanoparticles. For stabilization, the device according to the invention can be coated with a thin porous layer of silica. Preferably, the coating is applied to the surface of the superstructure. This can offer additional stability to the superstructure, which is applied as a thin film, but due to the porous structure of the coating, accessibility of the nanoparticles surface is ensured, for example for the catalyst.

In an embodiment of the invention, the substrate is made of glass or silicon, or is a conductive substrate like indium tin oxide coated glass.

In an embodiment of the invention, the plasmonic nanoparticles are made of gold, silver, copper, or aluminum, and/or the catalytically active nanoparticles are made of a catalytically active metal like platinum, palladium, ruthenium, or rhodium.

In an embodiment of the invention, the device is configured for photocatalytic hydrogen evolution. Catalytic reactions can include but are not restricted to hydrogen evolution reactions (HER), as was demonstrated with formic acid decomposition at room temperature. In addition or alternatively, the device can be configured to support catalytic reactions like Redoxreactions, addition reactions, dissociation reactions, aromatic couplings, and the like.

According to another aspect of the invention, there is provided a method of manufacturing the device for heterogeneous plasmonic photocatalysis according to any of the preceding embodiments. The method comprises the step of providing a plurality of nanoparticles. The plurality of nanoparticles comprises a plurality of plasmonic nanoparticles and a plurality of catalytically active nanoparticles, or the plurality of nanoparticles comprises a plurality of bimetallic nanoparticles comprising a plasmonic metal core and a catalytically active metal coating. The method comprises the steps of functionalizing the plurality of nanoparticles with polystyrene-based ligands and providing the nanoparticles with the polystyrene-based ligands in an organic solvent. The method comprises further the steps of applying the nanoparticles with the polystyrene-based ligands in the organic solvent onto a polar liquid subphase, and causing self-assembly of the nanoparticles to a film of a crystalline or quasicrystalline superstructure of plasmonic nanoparticles by drying the organic solvent. Further, the method comprises the step of transferring the film of the superstructure of plasmonic nanoparticles from the polar liquid subphase to a substrate.

The preparation of the catalytic thin film material for manufacturing the device for heterogeneous plasmonic photocatalysis can include the following steps. All nanoparticles to be included in the device are synthesized, preferably according to established protocols and with known methods. The nanoparticles are functionalized with polystyrene-based ligands as coating, and purified yielding polystyrene-coated nanoparticles in an organic solvent, which can be toluene or chloroform, for example. Self-assembly of the nanoparticle mixtures or the bimetallic nanoparticles is achieved on a liquid subphase. The self-assembled thin films are transferred to a conductive or non-conductive substrate.

The formation of the crystalline superstructures in the form of thin films can be achieved by self-assembly of the materials on a polar liquid subphase like water, ethylene glycol, diethylene glycol, or glycerol, followed by the transfer to an arbitrary substrate like glass, silicon, or conductive substrates as indium tin oxide (ITO) coated glass, and drying in vacuum.

It is emphasized that the whole method of manufacturing is based on straightforward colloidal chemistry and doesn't require any advanced lithography techniques and facilities which is in general a big advantage of self-assembly-based protocols.

In an embodiment of the invention, the method comprises further the step of coating the film of the superstructure of plasmonic nanoparticles with a porous layer of silica.

Thus, the benefits provided by any of the above aspects equally apply to all of the other aspects and vice versa.

In a gist, the invention relates to a device for heterogeneous plasmonic photocatalysis. The device comprises a crystalline or quasi-crystalline superstructure of plasmonic nanoparticles attached to a substrate, and a plurality of catalytically active nanoparticles embedded into the superstructure of plasmonic nanoparticles. Further, the invention relates to a method of manufacturing the device for heterogeneous plasmonic photocatalysis.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a schematic setup of a device for heterogeneous plasmonic photocatalysis according to an embodiment of the invention.
Figs. 2A and 2B show transmission electron microscopy photographs of a device for heterogeneous plasmonic photocatalysis in two different magnifications according to another embodiment of the invention.
Fig. 3 shows a transmission electron microscopy photograph of a device for heterogeneous plasmonic photocatalysis with a bilayer according to another embodiment of the invention.
Figs. 4, 5, and 6 show transmission electron microscopy photographs of a device for heterogeneous plasmonic photocatalysis with tuned geometry according to another embodiment of the invention.
Fig. 7 shows a transmission electron microscopy photograph of a device for heterogeneous plasmonic photocatalysis with bimetallic nanoparticles according to another embodiment of the invention.
Fig. 8 shows photocatalytic performances of both an Au supercrystal and an Au-Pt supercrystal on the formic acid decomposition.
Fig. 9 shows a block diagram of a method of manufacturing a device for heterogeneous plasmonic photocatalysis according to an embodiment of the invention.

### DETAILED DESCRIPTION OF EMBODIMENTS

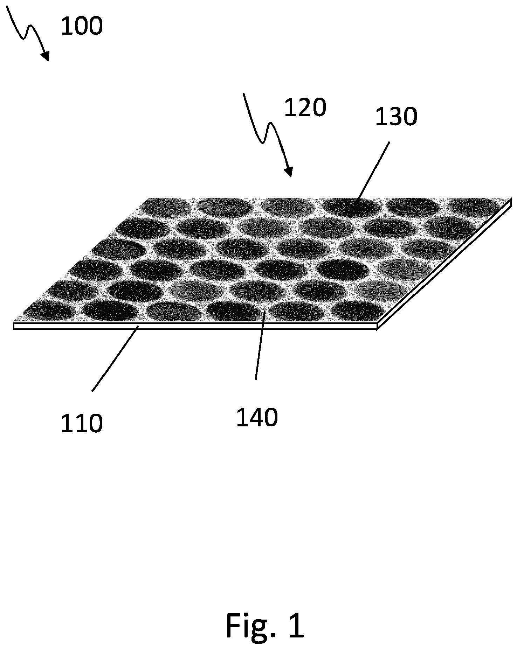

Fig. 1 shows a schematic setup of a device 100 for heterogeneous plasmonic photocatalysis according to an embodiment of the invention. A plurality of plasmonic nanoparticles 130 is arranged to a superstructure 120. This superstructure 120 is attached to a substrate 110. In the interspaces in between the plasmonic nanoparticles, a plurality of catalytically active nanoparticles 140 is embedded.

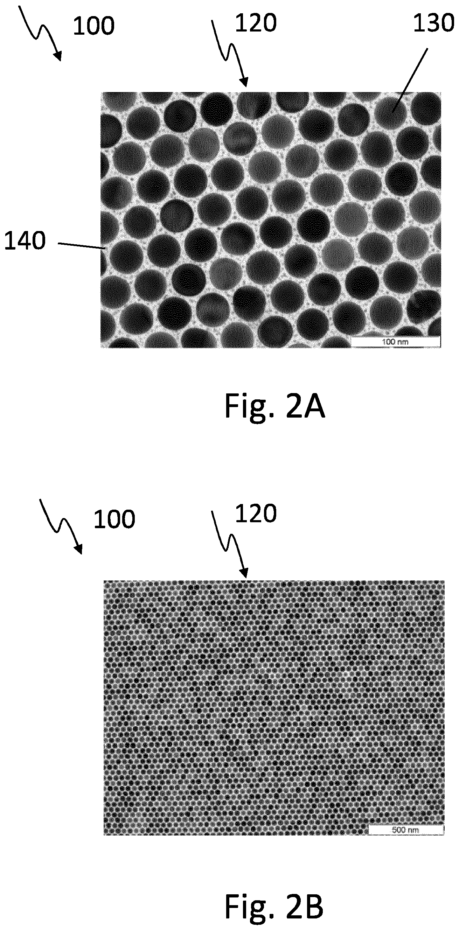

Figs. 2A and 2B show transmission electron microscopy photographs of a device 100 for heterogeneous plasmonic photocatalysis in two different magnifications according to another embodiment of the invention. This thin film of an exemplary nanoparticle superstructure comprises gold nanoparticles as plasmonic nanoparticles 130 which are about 39 nm in diameter, and intercalated catalytic active platinum nanoparticles 140 with a diameter of about 3 nm. The interparticle gaps between the plasmonic gold nanoparticles are about 5 nm. Both, figure 2A and figure 2B, show a monolayer of plasmonic nanoparticles with a 2-D hexagonal quasi crystalline order. The scale bar is 100 nm for figure 2A and 500 nm for figure 2B.

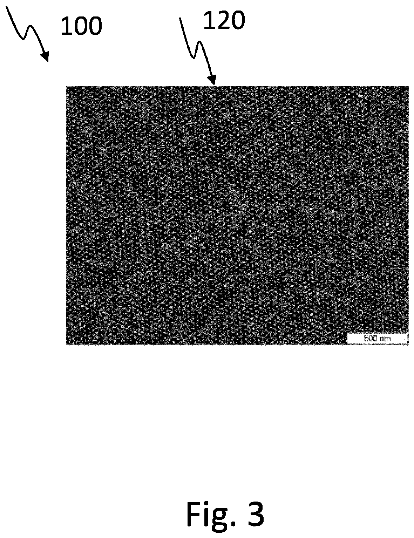

Fig. 3 shows a transmission electron microscopy photograph of a device 100 for heterogeneous plasmonic photocatalysis with a bilayer of the superstructure 120 of plasmonic nanoparticles 130 according to another embodiment of the invention. The particle size and interparticle gaps correspond to the superstructure shown in figures 2A and 2B. The thin films exhibit a defined layered structure with thicknesses ranging from mono- to multilayers.

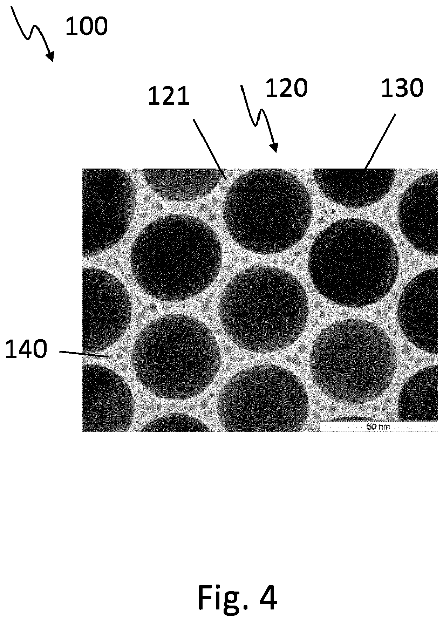

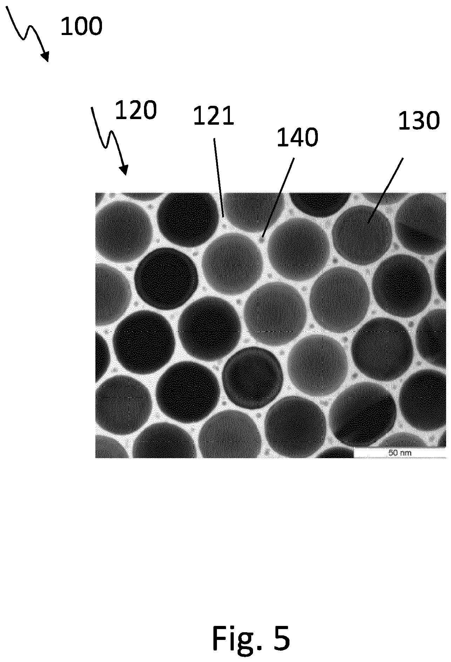

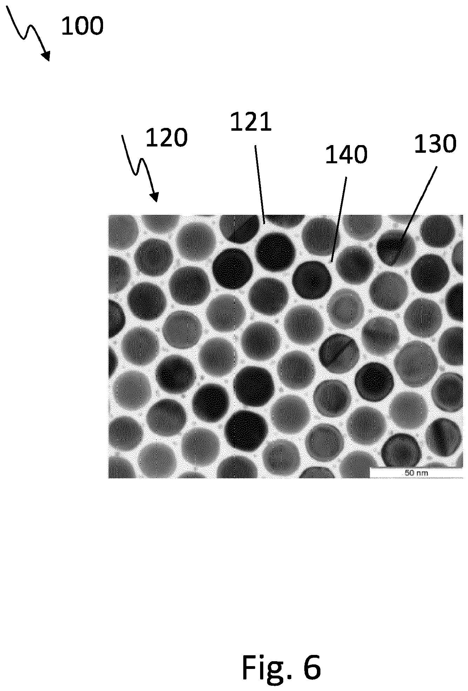

Figs. 4, 5, and 6 show transmission electron microscopy photographs of a device 100 for heterogeneous plasmonic photocatalysis with tuned geometry according to another embodiment of the invention. With the variation of the size of the plasmonic nanoparticles and the interparticle spacing, the tuning of the geometry can be demonstrated. Geometry, interparticle spacing and loading with platinum nanoparticles can be tuned via the molecular weight of the polystyrene coating ligand, the diameter of the gold nanoparticles, and the ratio of gold nanoparticles to platinum nanoparticles. In figure 4, the diameter of the gold nanoparticles is 39 nm, and the gaps between the gold nanoparticles have a width of about 5.5 nm. In figure 5, the diameter of the gold nanoparticles is 35 nm, and the gaps between the gold nanoparticles have a width of about 2.5 nm. And in figure 6, the diameter of the gold nanoparticles is 22 nm, and the gaps between the gold nanoparticles have a width of about 3.5 nm. In all samples, the diameter of the platinum nanoparticles is about 3 nm. It is noted that the platinum nanoparticles as catalytically active nanoparticles in figures 5 and 6 are located preferably in the center of three adjacent nanoparticles, whereas figure 4 shows an essentially homogeneous distribution of the platinum nanoparticles along the interparticle gap.

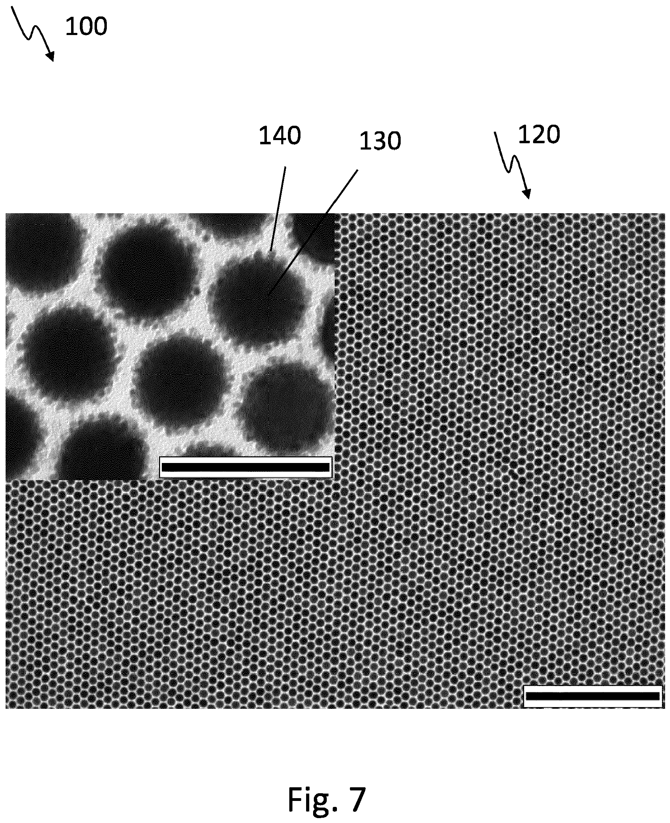

Fig. 7 shows a transmission electron microscopy photograph of a device 100 for heterogeneous plasmonic photocatalysis with bimetallic nanoparticles according to another embodiment of the invention. The bimetallic nanoparticles comprise plasmonic nanoparticles 130 as plasmonic core, whereas catalytically active nanoparticles 140 are attached to the surface of the plasmonic nanoparticles 130 as coating. Thus, bimetallic nanoparticles are formed, which are arranged in a superstructure 120. The superstructure is a 2-D hexagonal supercrystal of bimetallic nanoparticles with a diameter of the gold nanoparticles of about 50 nm, which are coated with a porous shell of palladium with a shell thickness of about 6 nm. The scale bars are 1 µm for the large picture and 100 nm for the inset.

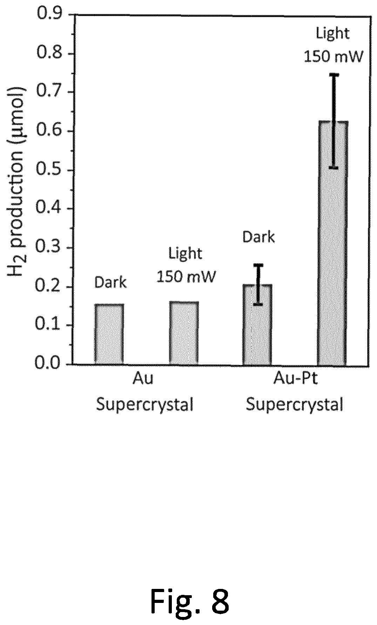

Fig. 8 shows photocatalytic performances of both an Au supercrystal and an Au-Pt supercrystal on the formic acid decomposition, which is a reaction producing hydrogen. Photocatalytic tests for such structures have been performed with a supercrystal comprising gold nanoparticles, which was followed by the successful fabrication of the hybrid structure through the inclusion of Pt nanoparticles to the system and thus forming an Au-Pt supercrystal. The performance of the gold-platinum supercrystal has been compared with the pristine supercrystal. The preliminary results obtained in those tests are shown in figure 8. It can be already realized that the inclusion of the Pt nanoparticles is beneficial for the overall activity, which presents a three-fold increase under simulated sunlight conditions of 150 mW cm⁻², compared to the Au supercrystal with or without illumination. These results stress how beneficial it is to mix materials of different natures to exploit the individual properties of each material to accomplish a superior photocatalyst. Therefore, these unprecedented systems set a benchmark in the design of future heterostructures with well-organized patterns.

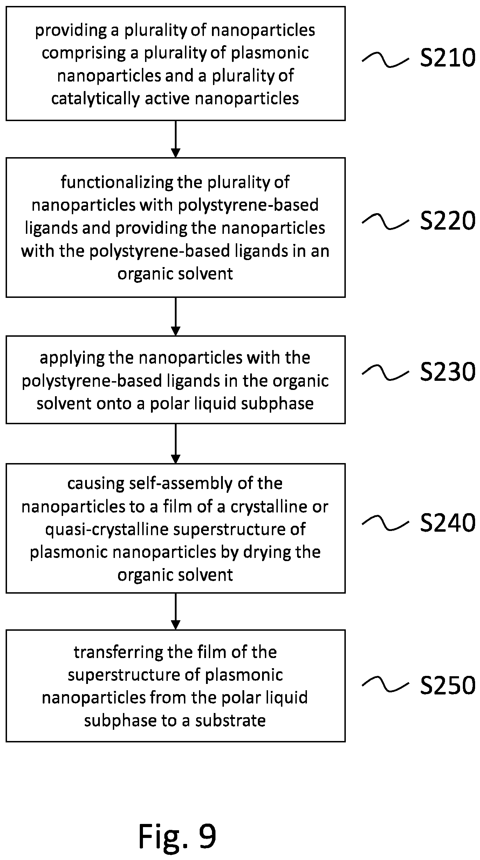

Fig. 9 shows a block diagram of a method of manufacturing a device 100 for heterogeneous plasmonic photocatalysis according to an embodiment of the invention. The method comprises the step S210 of providing a plurality of nanoparticles, wherein the plurality of nanoparticles comprises a plurality of plasmonic nanoparticles 130 and a plurality of catalytically active nanoparticles 140, or wherein the plurality of nanoparticles comprises a plurality of bimetallic nanoparticles comprising a plasmonic metal core and a catalytically active metal coating. However, the bimetallic nanoparticle can be regarded as plasmonic nanoparticle with a plasmonic core and catalytically active nanoparticles coated to the surface of the plasmonic nanoparticle. The method comprises further the step S220 of functionalizing the plurality of nanoparticles with polystyrene-based ligands and providing the nanoparticles with the polystyrene-based ligands in an organic solvent, and the step S230 of applying the nanoparticles with the polystyrene-based ligands in the organic solvent onto a polar liquid subphase. Further, the method comprises the step S240 of causing self-assembly of the nanoparticles to a film of a crystalline or quasi-crystalline superstructure 120 of plasmonic nanoparticles 130 by drying the organic solvent, and the step S250 of transferring the film of the superstructure 120 of plasmonic nanoparticles 130 from the polar liquid subphase to a substrate 110.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: device for heterogeneous plasmonic photocatalysis
- 110: substrate
- 120: superstructure of plasmonic nanoparticles
- 121: interspace of the superstructure
- 130: plasmonic nanoparticle
- 140: catalytically active nanoparticles

## Claims

1. A device (100) for heterogeneous plasmonic photocatalysis, comprising
a substrate (110);
a superstructure (120) of plasmonic nanoparticles (130) attached to the substrate; and
a plurality of catalytically active nanoparticles (140) embedded into the superstructure (120) of plasmonic nanoparticles (130).

2. The device (100) according to claim 1, wherein a diameter of the plasmonic nanoparticles (130) and a diameter of the catalytically active nanoparticles (140) is in the range of 1 to 100 nm.

3. The device (100) according to claim 2, wherein the diameter of the plasmonic nanoparticles (130) is larger than 20 nm and/or wherein the diameter of the catalytically active nanoparticles (140) is smaller than 10 nm.

4. The device (100) according to any of the preceding claims, wherein the superstructure (120) of plasmonic nanoparticles (130) is a crystalline or a quasi-crystalline superstructure.

5. The device (100) according to any of the preceding claims, wherein the superstructure (120) of plasmonic nanoparticles (130) has a two-dimensional hexagonal order, or a face-centered cubic or hexagonal close-packed three-dimensional order.

6. The device (100) according to claim 5, wherein the superstructure (120) of plasmonic nanoparticles (130) consists of a monolayer or of a multilayer of plasmonic nanoparticles (130).

7. The device (100) according to any of the preceding claims, wherein the plurality of catalytically active nanoparticles (140) is intercalated in interspaces (121) of the superstructure (120) of plasmonic nanoparticles (130) in between the plasmonic nanoparticles (130).

8. The device (100) according to claim 7, wherein each of the plurality of catalytically active nanoparticles (140) is positioned essentially in the center between three adjacent plasmonic nanoparticles (130).

9. The device (100) according to any of claims 1 to 6, wherein the plurality of catalytically active nanoparticles (140) is attached to a surface of the plasmonic nanoparticles (130), thereby generating bimetallic nanoparticles comprising a plasmonic metal core and a catalytically active metal coating.

10. The device (100) according to any of the preceding claims, further comprising a porous layer of silica coated onto the superstructure (120) of plasmonic nanoparticles (130).

11. The device (100) according to any of the preceding claims, wherein the substrate (110) is made of glass or silicon, or is a conductive substrate like indium tin oxide coated glass.

12. The device (100) according to any of the preceding claims, wherein the plasmonic nanoparticles (130) are made of gold, silver, copper, or aluminum, and/or wherein the catalytically active nanoparticles (140) are made of a catalytically active metal like platinum, palladium, ruthenium, or rhodium.

13. The device (100) according to any of the preceding claims, wherein the device is configured for photocatalytic hydrogen evolution.

14. A method of manufacturing the device (100) for heterogeneous plasmonic photocatalysis according to any of claims 1 to 13, the method comprising the steps of:
Providing (S210) a plurality of nanoparticles, wherein the plurality of nanoparticles comprises a plurality of plasmonic nanoparticles (130) and a plurality of catalytically active nanoparticles (140), or wherein the plurality of nanoparticles comprises a plurality of bimetallic nanoparticles comprising a plasmonic metal core and a catalytically active metal coating;
functionalizing (S220) the plurality of nanoparticles with polystyrene-based ligands and providing the nanoparticles with the polystyrene-based ligands in an organic solvent;
applying (S230) the nanoparticles with the polystyrene-based ligands in the organic solvent onto a polar liquid subphase;
causing (S240) self-assembly of the nanoparticles to a film of a crystalline or quasicrystalline superstructure (120) of plasmonic nanoparticles (130) by drying the organic solvent; and
transferring (S250) the film of the superstructure (120) of plasmonic nanoparticles (130) from the polar liquid subphase to a substrate (110).

15. The method according to claim 14, further comprising the step of coating the film of the superstructure (120) of plasmonic nanoparticles (130) with a porous layer of silica.
